Europäisches Patentamt

**European Patent Office**

Office européen des brevets

(11) Numéro de publication : **0 009 430**
**B1**

(12) **FASCICULE DE BREVET EUROPÉEN**

(45) Date de publication du fascicule du brevet :
17.03.82

(51) Int. Cl.³ : **G 01 N 27/26, C 08 L 5/12**

(21) Numéro de dépôt : **79400607.2**

(22) Date de dépôt : **04.09.79**

(54) **Gels aqueux d'agarose, associations constituées par lesdits gels et le tube les contenant, et applications desdits gels.**

(30) Priorité : **22.09.78 FR 7827179**

(43) Date de publication de la demande :
**02.04.80 (Bulletin 80/07)**

(45) Mention de la délivrance du brevet :
**17.03.82 Bulletin 82/11**

(84) Etats contractants désignés :
**DE FR GB NL**

(56) Documents cités :
**FR - A - 1 518 605**
**US - A - 2 963 373**
**US - A - 3 766 047**
**US - E - 26 199**

(73) Titulaire : **PHARMINDUSTRIE**
**35 Quai du Moulin de Cage**
**F-92231 Gennevilliers (FR)**

(72) Inventeur : **Boschetti, Egisto**
**4 Place des Remparts**
**F-78400 Chatou (FR)**

(74) Mandataire : **Houssin, Jean et al**
**PRODUITS CHIMIQUES UGINE KUHLMANN Service**
**Propriété Industrielle Tour Manhattan Cedex 21**
**F-92087 Paris La Defense 2 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

Gels aqueux d'agarose, associations constituées par lesdits gels et le tube les contenant, et applications desdits gels

La présente invention a pour objet des gels aqueux d'agarose ou d'agar-agar. Elle concerne également les associations constituées par les gels en question et le tube métallique qui les contient.

L'agarose et l'agar-agar sont des polysaccharides qui sont solubles à chaud dans l'eau et forment, lors du refroidissement des solutions aqueuses à température inférieure à environ 40 °C, des gels aqueux durs. De tels gels sont stables jusqu'à environ 70-80 °C.

L'agarose et l'agar-agar sont utilisés, sous forme de gels aqueux à faible teneur en agarose ou agar-agar (teneur inférieure à 5 % et habituellement comprise entre 1 % et 2 %), dans des techniques telles que l'électrophorèse, l'immunoélectrophorèse, la double diffusion, l'immunodiffusion radiale, la contrélectrophorèse, l'électroimmunodiffusion, l'isoélectrofocalisation et leurs combinaisons. Un autre domaine d'application de ces gels est la culture de cellules en général et la bactériologie.

La préparation, à partir de poudre d'agarose ou d'agar-agar, de gels aqueux homogènes pour la mise en œuvre des techniques mentionnées ci-dessus est une opération longue, dont la réussite nécessite d'opérer suivant un mode opératoire bien précis.

Afin d'éviter aux utilisateurs des pertes de temps et des erreurs de manipulation, il a été proposé de leur présenter l'agarose ou l'agar-agar soit sous forme de plaques de gel aqueux prêtes à l'emploi, soit sous forme de plaques de gel aqueux déshydratées, utilisables après une simple réhydratation. Mais ce faisant on impose à l'utilisateur la forme du gel et son épaisseur. De plus, il n'est pas toujours possible d'incorporer dans les plaques de gel déshydratées tous les constituants nécessaires à la mise en œuvre de la technique considérée car les constituants de faible masse moléculaire diffusent hors du gel lors de la réhydratation.

Il a en particulier été proposé dans le brevet US-A 3 766 047 de présenter sous forme de films prêts à l'emploi des gels aqueux tamponnés pour électrophorèse qui contiennent 0,5 % à 10 % d'agarose, 0,025 % à 0,035 % d'EDTA en tant qu'agent bactériostatique, 1 % à 10 % d'un mono-ou disaccharide, en particulier le sucrose, et un tampon ayant un pH 8,2 à 9,5 et renfermant comme élément basique un amino alcool aliphatique de bas poids moléculaire, en particulier l'amino-2 méthyl-2 propanol-1.

Afin d'éviter les inconvénients signalés plus haut, la demanderesse a pensé à présenter aux utilisateurs des gels aqueux homogènes d'agarose ou d'agar-agar prêts à l'emploi et conditionnés dans des tubes métalliques.

Toutefois ce type de conditionnement pose un problème important concernant la conservation du gel. En effet, dans les conditions normales d'utilisation des tubes, l'eau d'hydratation des gels a tendance à se séparer par évaporation et condensation sur les parois du tube, d'où une augmentation progressive de la concentration en agarose ou agar-agar du gel. La demanderesse évite ce phénomène en incorporant dans les gels aqueux d'agarose ou d'agar-agar un composé non ionique hydroxylé, solide à la température de 40 °C, ayant une masse moléculaire comprise entre 100 et 1 000 daltons et une solubilité dans l'eau à la température de 4 °C au moins égale à 4,50 % en poids, parfaitement neutre (c'est-à-dire exempt de groupes fonctionnels acides tels que les groupes COOH et SO$_3$H, et de groupes fonctionnels basiques, tels que les groupes amino ou amino substitué), et choisi parmi le sorbitol et le mannitol.

Les gels aqueux selon la présente invention, qui sont des produits nouveaux, contiennent :

— 0,5 % à 3 % en poids d'agarose ou d'agar-agar,
— 0,1 % à 30 % en poids, de préférence 4,5 % à 15 % en poids, de sorbitol ou de mannitol,
— 0,001 % à 0,05 % en poids d'un bactériostatique.

Comme bactériostatiques utilisables on peut citer par exemple l'azoture de sodium, le merthiolate de sodium, le trichloro-1,1,1 méthyl-2 propanol-2 (produit connu sous la dénomination commerciale chlorétone) et le bis p-chloro-phényldiguanidohexane (produit connu sous la dénomination commerciale chlorhexidine). On utilise de préférence comme bactériostatique un composé non ionique.

Outre les trois constituants signalés ci-dessus et l'eau d'hydratation, les gels aqueux selon l'invention peuvent renfermer éventuellement d'autres éléments qui sont nécessaires à la mise en œuvre des techniques signalées précédemment, tels que tampons, ampholytes supports, polymères synthétiques ou naturels hydrosolubles non ioniques, agents dénaturants des protéines, protéines pour zymogrammes, éléments pour révélation enzymatique, etc.

Les concentrations et teneurs auxquelles ces divers éléments optionnels peuvent figurer dans les gels aqueux selon l'invention sont les suivantes :

— tampon :
concentration préférentielle dans le gel : 0,01 M à 0,1 M,
— ampholyte support : 1 % à 4 % en poids,
— polymères synthétique ou naturel hydrosoluble non ionique : 3 % à 15 % en poids, de préférence 4,5 % à 7 % en poids,
— agent dénaturant : 0,1 à 10 % en poids, de préférence environ 1 % en poids,
— protéine pour zymogrammes : 0,5 % à 5 % en poids, de préférence environ 2,5 % en poids.

Comme exemples de tampons que l'on peut incorporer dans les gels selon l'invention on peut citer les tampons ayant un pH compris entre 4 et 10 et en particulier le tampon tris (hydroxyméthyl) aminométhane (en abrégé tris)/glycocolle pH 8,2, le tampon tris/acide éthylènediaminetétracétique pH 8,2, le tampon diéthylmalonylurée (barbital)/sel de sodium de la diéthylmalonylurée (barbital sodique) pH 8,4, le tampon tris/barbital/lactate de calcium pH 8,4, le tampon tris/HCl pH 9,7 et les tampons phosphate monobasique/phosphate dibasique pH 6,5 à 8,5.

Comme exemples d'ampholytes supports que l'on peut incorporer dans les gels selon l'invention on peut citer les acides carboxyliques, de préférence aliphatiques ou alicycliques, ayant une masse moléculaire comprise entre 200 et 1 500 daltons et possédant plusieurs groupes fonctionnels COOH et plusieurs groupes amino, amino monosubstitué ou amino disubstitué, et leurs mélanges, en particulier les mélanges d'acides amino carboxyliques polyprotiques ayant au moins quatre groupes protolytiques, dont l'un au moins est un groupe carboxylique et l'un au moins est un atome d'azote basique, décrits dans le brevet anglais 1 106 818.

Comme exemples de polymères synthétiques ou naturels hydrosolubles non ioniques que l'on peut incorporer dans les gels selon l'invention on peut citer l'amidon et les polyacrylamides linéaires, solubles dans l'eau, dont la viscosité en solution aqueuse à 5 % est à 22 °C inférieure ou égale à 17 000 mPa-sec (centipoises), décrits dans la demande de brevet en France n° 75/00922, publiée sous le n° 2 297 879.

Comme exemples d'agents dénaturants des protéines que l'on peut incorporer dans les gels selon l'invention on peut citer le dodécylsulfate de sodium, l'urée, le déoxycholate de sodium, le β-mercaptoéthanol, le p-isooctylphénoxypolyéthoxyéthanol connu sous la dénomination commerciale triton X-100.

Comme protéines pour zymogrammes on peut citer la caséine et la gélatine.

Pour préparer les gels aqueux homogènes selon l'invention et les conditionner dans les tubes on opère en général comme suit :

On réalise une solution aqueuse contenant les quantités voulues des divers constituants autres que l'agarose ou l'agar-agar, puis on ajoute à cette solution la quantité voulue d'agarose ou d'agar-agar et chauffe la solution jusqu'à ébullition pour solubiliser complètement l'agarose ou l'agar-agar. On filtre ensuite la solution chaude (cette filtration peut éventuellement être stérilisante de façon à obtenir des gels stériles) et répartit la solution filtrée dans les tubes. On laisse refroidir la solution filtrée dans les tubes jusqu'à gélification et ferme les tubes.

Dans le cas particulier où l'on désire obtenir un gel aqueux contenant un polyacrylamide linéaire, on commence par réaliser, en suivant le mode opératoire précédent, une solution aqueuse contenant les constituants (y compris l'agarose ou l'agar-agar) autres que le polyacrylamide. Puis on filtre à chaud cette solution et ramène sa température à 60 °C environ. On ajoute alors à la solution filtrée la quantité voulue d'acrylamide et un initiateur de polymérisation et effectue la polymérisation de l'acrylamide à température supérieure à la température de gélification, par exemple à 60 °C. Une fois la polymérisation terminée on répartit la solution dans les tubes, laisse gélifier et ferme les tubes.

Pour plus amples détails sur le mode de préparation des gels selon l'invention on se reportera aux exemples de réalisation décrits plus loin.

Les tubes utilisés pour le conditionnement des gels aqueux selon l'invention sont des tubes métalliques du type tubes pour pommade, dont l'intérieur est de préférence revêtu d'une mince pellicule de vernis. Le volume de ces tubes peut aller de 10 ml à 500 ml, le rapport diamètre du tube/diamètre de la sortie étant compris entre 2 et 20, de préférence entre 3 et 8. Les tubes métalliques ont la propriété de s'écraser lorsqu'on les presse pour faire sortir le produit. Leur volume diminue de manière irréversible au fur et à mesure du prélèvement du gel et de ce fait il n'y a pas de rentrée d'air, ce qui est fondamental pour la bonne conservation du gel restant dans le tube et permet d'avoir un gel de composition constante pendant toute la durée d'utilisation du tube. Les tubes en matière plastique, qui sont élastiques et reprennent leur forme initiale après utilisation, ne conviennent pas au conditionnement des gels selon l'invention.

Les gels aqueux selon l'invention conviennent pour toutes les techniques qui impliquent l'utilisation de gels aqueux d'agarose ou d'agar-agar. Leur mise en œuvre est extrêmement simple et rapide. Au moment de l'utilisation il suffit de prélever dans un petit récipient la quantité voulue de gel en pressant le tube, de placer le récipient quelques secondes à quelques minutes dans un bain-marie bouillant pour faire fondre le gel et de couler le gel fondu par exemple sur une plaque ou une lame de verre où on le laisse gélifier à nouveau par refroidissement.

La fusion du gel est une opération rapide, qui ne dure que quelques secondes à quelques minutes suivant la quantité de gel prélevée. En effet, du fait de la petitesse du diamètre de la sortie par rapport à celui du tube, le gel prélevé se présente sous forme de granules relativement petits, qui offrent une surface importante pour les échanges thermiques.

Les exemples suivants illustrent l'invention sans la limiter :

Exemple 1

Préparation d'un gel aqueux d'agarose en tube pour électrophorèse et immunoélectrophorèse.

Dans trois litres d'eau déminéralisée on dissout 24,72 g du sel de sodium de la diéthylmalonylurée (barbital sodique), 4,8 g de diéthylmalonylurée (barbital), 150 g de sorbitol et 300 g de merthiolate de sodium. On ajuste le pH à 8,4 si nécessaire puis on place la solution dans un bain-marie à 60 °C et on disperse sous agitation dans la solution 39 g d'agarose pour électrophorèse. On chauffe le bain-marie progressivement jusqu'à ébullition et poursuit l'agitation jusqu'à solubilisation complète de l'agarose. On amène ensuite la température de la solution à 70 °C-80 °C et filtre la solution sous vide à chaud. On répartit la solution chaude dans des tubes métalliques d'un volume de 150 ml dont l'intérieur est revêtu d'un vernis, puis on laisse refroidir jusqu'à gélification de la solution et ferme les tubes. On obtient ainsi un gel aqueux tamponné, conditionné dans des tubes, qui contient environ 1,2 % d'agarose et 4,7 % de sorbitol. Ce gel en tube se conserve pendant plusieurs mois, à une température de 4 °C à 30 °C. Il ne doit pas être amené à température inférieure à 0 °C.

Le gel ainsi préparé convient à l'électrophorèse en plaque de substances biologiques (cf. HJERTEN, S. Biochim. Biophys. Acta *53* (1961), 514-517) et à l'immunoélectrophorèse classique (cf. GRABAR, P., WILLIAMS, C. A., Biochim. Biophys. Acta *10* (1953), 193-194). Au moment de l'utilisation on ouvre le tube, fait sortir par simple pression sur le tube la quantité voulue de gel et recueille le gel extrudé dans un récipient (tube à essai en verre ou erlenmeyer). On chauffe le récipient quelques secondes à quelques minutes dans un bain-marie bouillant pour assurer une parfaite fusion du gel, prélève à l'aide d'une pipette graduée la quantité voulue de gel fondu et la coule sur une lame de verre (par exemple lame porte-objet de microscope). Ensuite on laisse gélifier, perce les puits ou les gouttières à l'aide d'un emporte-pièce et effectue l'électrophorèse ou l'immunoélectrophorèse de manière classique.

## Exemple 2

Préparation d'un gel aqueux d'agarose en tube pour électrophorèse et immunoélectrophorèse.

On opère comme à l'exemple 1 sauf que l'on n'ajoute pas au départ de barbital sodique et de barbital et que l'on utilise 78 g d'agarose au lieu de 38 g. On obtient un gel aqueux non tamponné contenant environ 2,4 % d'agarose et 4,7 % de sorbitol. Ce gel en tube se conserve pendant plusieurs mois à 4 °C.

Au moment de l'utilisation le gel extrudé est mélangé, en parties égales, avec le tampon choisi pour l'électrophorèse ou l'immunoélectrophorèse.

## Exemple 3

Préparation d'un gel aqueux d'agar-agar pour immunoélectrophorèse.

On opère comme à l'exemple 1 en remplaçant l'agarose par l'agar-agar et les 150 g de sorbitol par 180 g de mannitol. On obtient ainsi un gel aqueux tamponné contenant environ 1,2 % d'agar-agar et 5,5 % de mannitol. Ce gel en tube se conserve à une température de 4 °C à 30 °C et convient à l'immunoélectrophorèse sur gel d'agar selon la technique de GRABAR et WILLIAMS (voir référence citée plus haut).

Au moment de l'utilisation le gel est extrudé, fondu et coulé comme indiqué à l'exemple 1. Après refroidissement et gélification on découpe, à l'aide d'un emporte-pièce, les deux puits et la gouttière centrale et effectue l'immunoélectrophorèse de manière classique.

## Exemple 4

Préparation d'un gel aqueux d'agarose pour microfractionnement électrophorétique.

Dans trois litres d'eau déminéralisée on dissout 24,72 g de barbital sodique, 4,8 g de barbital, 150 g de sorbitol et 300 g de merthiolate de sodium. On ajuste le pH à 8,4 si nécessaire puis on place la solution dans un bain-marie à 60 °C et on disperse sous agitation dans la solution 39 g d'agarose pour électrophorèse. On chauffe le bain-marie progressivement jusqu'à ébullition et poursuit l'agitation jusqu'à solubilisation complète de l'agarose. On amène ensuite la température de la solution à 70 °C-80 °C et filtre sous vide à chaud. On amène la solution filtrée à 60 °C et ajoute 150 g d'acrylamide puis, sous agitation, 1 ml de N,N,N',N'-tétraméthyl éthylène diamine (TEMED) et 800 mg de persulfate d'ammonium. On poursuit l'agitation lentement, à 60 °C, pendant deux heures. On répartit la solution visqueuse et chaude dans des tubes métalliques, puis on laisse refroidir jusqu'à gélification de la solution dans les tubes et ferme les tubes. On obtient ainsi un gel aqueux tamponné, conditionné dans des tubes, qui contient environ 1,2 % d'agarose, 4,5 % de sorbitol et 4,5 % de polyacrylamide non réticulé hydrosoluble. Ce gel en tube se conserve plusieurs mois à une température de 4 °C à 30 °C.

Au moment de l'utilisation le gel est extrudé, fondu et coulé comme indiqué à l'exemple 1. Après refroidissement et gélification on perce un réservoir de départ et effectue le microfractionnement électrophorétique selon la technique employée par URIEL avec les gels mixtes agarose-polyacrylamide réticulé (cf. URIEL, J. Bull. Soc. Chim. Biol. *48* (1966), 869).

## Exemple 5

Préparation d'un gel aqueux d'agarose pour la détermination de la masse moléculaire des protéines par électrophorèse.

On opère comme à l'exemple 4 en remplaçant au départ le tampon barbital sodique/barbital pH 8,4 par un tampon tris/glycocolle pH 8,2 et en introduisant en plus au départ dans les trois litres d'eau déminéralisée 30 g de dodécylsulfate de sodium et 3 g de β-mercaptoéthanol. On obtient ainsi un gel aqueux tamponné, conditionné dans des tubes, qui se conserve à + 4 °C et convient à la détermination de la masse moléculaire des produits biologiques, en particulier des protéines. Ce gel ne doit pas être amené à température inférieure à 0 °C.

Au moment de l'utilisation le gel est extrudé, fondu et coulé comme indiqué à l'exemple 1. On laisse gélifier, puis effectue la détermination de la masse moléculaire des protéines en suivant la technique de SHAPIRO, A. L. Anal. Biochem. *29* (1969) 505.

Exemple 6

Préparation d'un gel aqueux d'agarose pour révélation enzymatique.

En opérant suivant un mode opératoire similaire à celui de l'exemple 1 et en introduisant dans la solution avant gélification des quantités voulues des constituants indiqués ci-dessous, on prépare un gel aqueux tamponné répondant à la composition suivante :

— agarose : 1,2 % en poids
— sorbitol : 10 % en poids
— azoture de sodium : 0,01 % en poids
— tampon tris/HCl pH 9,7 : concentration 0,05 M
— MgCl$_2$ : 0,05 % en poids
— phosphate d'α-naphtyle : 0,04 % en poids
— Fast Blue B (C. I. Azoic Diazo component 48 ; C. I. Number 37 235 ; sel de diazonium stabilisé de l'orthodianisidine) : 0,05 % en poids.

Ce gel convient comme substrat pour la révélation enzymatique de la phosphatase alcaline.

Dans le gel précédent on peut remplacer le Fast Blue B par le Fast Blue BB (C. I. Azoic Diazo Component 20, C. I. Number 37 175 ; sel de diazonium stabilisé de l'amino-4' diéthoxy-2',5' benzanilide).

**Revendications**

1. Gels aqueux contenant 0,5 % à 3 % en poids d'agarose ou d'agar-agar, 0,001 % à 0,05 % en poids d'un agent bactériostatique et 0,1 % à 30 % en poids d'un composé non ionique hydroxylé, solide à la température de 40 °C, ayant une masse moléculaire comprise entre 100 et 1 000 daltons, une solubilité dans l'eau à la température de 4 °C au moins égale à 4,50 % en poids, et exempt de groupes fonctionnels acides ou basiques, caractérisés en ce que ledit composé non ionique hydroxylé et le sorbitol ou le mannitol.

2. Gels aqueux selon la revendication 1, caractérisés en ce qu'ils contiennent 4,5 % à 15 % en poids de sorbitol ou de mannitol.

3. Gels aqueux selon l'une quelconque des revendications 1 et 2, caractérisés en ce qu'ils contiennent en plus un tampon.

4. Gels aqueux selon la revendication 3, caractérisés en ce que le tampon a un pH de 4 à 10 et en ce que sa concentration dans le gel est de 0,01 M à 0,1 M.

5. Gels aqueux selon l'une quelconque des revendications 1 à 4, caractérisés en ce qu'ils contiennent en plus 3 % à 15 % en poids d'un polymère synthétique ou naturel hydrosoluble non ionique.

6. Gels aqueux selon la revendication 5, caractérisés en ce qu'ils contiennent 4,5 % à 7 % en poids de polymère synthétique ou naturel hydrosoluble non ionique.

7. Gels aqueux selon l'une quelconque des revendications 5 et 6, caractérisés en ce que le polymère synthétique ou naturel hydrosoluble non ionique est l'amidon ou un polyacrylamide linéaire, soluble dans l'eau, dont la viscosité en solution aqueuse à 5 % est à 22 °C inférieure ou égale à 17 000 mPa-sec (centipoises).

8. Gels aqueux selon l'une quelconque des revendications 1 à 7, caractérisés en ce qu'ils contiennent en plus 0,1 % à 10 % en poids d'agent dénaturant des protéines.

9. Gels aqueux selon l'une quelconque des revendications 1 et 2, caractérisés en ce qu'ils contiennent en plus 1 % à 4 % en poids d'un ampholyte support.

10. Gels aqueux selon la revendication 9, caractérisés en ce que l'ampholyte support est un acide carboxylique aliphatique ou alicyclique ayant une masse moléculaire comprise entre 200 et 1 500 daltons et possédant plusieurs groupes fonctionnels COOH et plusieurs groupes amino, amino monosubstitué ou amino disubstitué, ou un mélange de tels acides.

11. Gels aqueux selon l'une quelconque des revendications 1 à 4, caractérisés en ce qu'ils contiennent en plus des éléments pour révélation enzymatique.

12. Gels aqueux selon l'une quelconque des revendications 1 à 4, caractérisés en ce qu'ils contiennent en plus 0,5 % à 5 % en poids de caséine ou de gélatine.

13. Associations constituées par un gel aqueux selon l'une quelconque des revendications 1 à 12 et un tube métallique le contenant, caractérisées en ce que ledit tube métallique a la propriété de s'écraser lorsqu'on le presse, son volume diminuant ainsi de manière irréversible au fur et à mesure du prélèvement du gel.

14. Associations selon la revendication 13, caractérisées en ce que le tube a un volume de 10 ml à 500 ml, le rapport diamètre du tube/diamètre de la sortie étant compris entre 2 et 20.

15. Application des gels aqueux selon l'une quelconque des revendications 1 à 12 dans les techniques d'électrophorèse, immunoélectrophorèse, double diffusion, immunodiffusion radiable, contrélectrophorèse, électroimmunodiffusion, isoélectrofocalisation et leurs combinaisons.

**Claims**

1. Aqueous gels containing 0.5 percent to 3 percent by weight of agarose or agar-agar, 0.001 percent to 0.05 percent by weight of a bacteriostatic agent and 0.1 percent to 30 percent by weight of a non-ionic hydroxylated compound, solid at the temperature of 40 °C, having a molecular weight between 100 and 1 000 daltons and a solubility in water at the temperature of 4 °C at least equal to 4.50 percent by weight, and free from acid or basic functional groups, characterised in that said non-ionic hydroxylated compound is sorbitol or mannitol.

2. Aqueous gels according to claim 1, characterised in that they contain 4.5 percent to 15 percent by weight of sorbitol or mannitol.

3. Aqueous gels according to anyone of claims 1 and 2, characterised in that they contain in addition a buffer.

4. Aqueous gels according to claim 3, characterised in that the buffer has a pH of 4 to 10 and in that its concentration in the gel is from 0.01 M to 0.1 M.

5. Aqueous gels according to anyone of claims 1 to 4, characterised in that they also contain 3 percent to 15 percent by weight of a non-ionic, water-soluble, synthetic or natural polymer.

6. Aqueous gels according to claim 5, characterised in that they contain 4.5 percent to 7 percent by weight of said non-ionic, water-soluble, synthetic or natural polymer.

7. Aqueous gels according to either of claims 5 and 6, characterised in that the non-ionic, water-soluble, synthetic or natural polymer is starch or a water-soluble linear polyacrylamide, the viscosity of which, in a 5 percent aqueous solution at 22 °C, is less than or equal to 17,000 mPa-sec (centipoises).

8. Aqueous gels according to anyone of claims 1 to 7, characterised in that they also contain 0.1 percent to 10 percent by weight of a protein denaturing agent.

9. Aqueous gels according to either of claims 1 and 2, characterised in that they also contain 1 percent to 4 percent by weight of a carrier ampholyte.

10. Aqueous gels according to claim 9, characterised in that the carrier ampholyte is an aliphatic or alicyclic carboxylic acid having a molecular weight between 200 and 1 500 daltons and having at least two COOH functional groups and at least two amino, monosubstituted amino or disubstituted amino groups, or a mixture of such acids.

11. Aqueous gels according to anyone of claims 1 to 4, characterised in that they also contain elements for the revelation of the enzymes.

12. Aqueous gels according to anyone of claims 1 to 4, characterised in that they also contain 0.5 percent to 5 percent by weight of casein or gelatin.

13. Associations consisting of an aqueous gel according to anyone of claims 1 to 12 and a metal tube containing it, characterised in that said metal tube has the property of flattening when it is pressed, its volume diminushing in an irreversible manner in proportion as the gel is removed.

14. Associations according to claim 13, characterised in that the tube has a volume of from 10 ml to 500 ml and the ratio diameter of the tube/diameter of the mouth is between 2 and 20.

15. Application of the aqueous gels according to anyone of claims 1 to 12 in the techniques of electrophoresis, immunoelectrophoresis, double diffusion, radial immunodiffusion, counterelectrophoresis, electroimmunodiffusion, isoelectrofocusing and their combinations.

**Ansprüche**

1. Wässrige Gele enthaltend 0,5 bis 3 Gew.-% Agarose oder Agar-Agar, 0,001 bis 0,05 Gew.-% eines bakteriostatischen Mittels und 0,1 bis 30 Gew.-% einer bei einer Temperatur von 40 °C festen, nicht-ionischen hydroxylgruppenhaltigen Verbindung mit einem Molekulargewicht zwischen 100 und 1 000 Dalton und einer Wasserlöslichkeit bei einer Temperatur von 4 °C von mindestens 4,50 Gew.-%, welche frei ist von sauren oder basischen funktionellen Gruppen, dadurch gekennzeichnet, daß die hydroxylgruppenhaltige, nicht-ionische Verbindung Sorbit oder Mannit ist.

2. Wässrige Gele nach Anspruch 1, dadurch gekennzeichnet, daß sie 4,5 bis 15 Gew.-% Sorbit oder Mannit enthalten.

3. Wässrige Gele nach einem der Ansprüche 1 und 2, dadurch gekennzeichnet, daß sie zusätzlich einen Puffer enthalten.

4. Wässrige Gele nach Anspruch 3, dadurch gekennzeichnet, daß der Puffer einen pH-Wert von 4 bis 10 aufweist und seine Konzentration in dem Gel 0,01 M bis 0,1 M beträgt.

5. Wässrige Gele nach einem der Ansprüche 1 bis 4, dadurch gekennzeichnet, daß sie zusätzlich 3 bis 15 Gew.-% eines synthetischen oder natürlichen, wasserlöslichen nicht-ionischen Polymeren enthalten.

6. Wässrige Gele nach Anspruch 5, dadurch gekennzeichnet, daß sie 4,5 bis 7 Gew.-% des synthetischen oder natürlichen, wasserlöslichen nicht-ionischen Polymeren enthalten.

7. Wässrige Gele nach einem der Ansprüche 5 und 6, dadurch gekennzeichnet, daß das synthetische oder natürliche, wasserlösliche nicht-ionische Polymere Stärke oder ein geradkettiges Polyacrylamid ist, welches in Wasser löslich ist und dessen Viskosität in 5 %iger wässriger Lösung bei 22 °C kleiner oder gleich 17 000 mPa-sec (centipoises) ist.

8. Wässrige Gele nach einem der Ansprüche 1 bis 7, dadurch gekennzeichnet, daß sie zusätzlich 0,1 bis 10 Gew.-% eines Proteine denaturierenden Mittels enthalten.

9. Wässrige Gele nach einem der Ansprüche 1 und 2, dadurch gekennzeichnet, daß sie zusätzlich 1 bis 4 Gew.-% eines Trägerampholyten enthalten.

10. Wässrige Gele nach Anspruch 9, dadurch gekennzeichnet, daß der Trägerampholyt eine aliphatische oder alicyclische Carbonsäure mit einem Molekulargewicht zwischen 200 und 1 500 Dalton, die mehrere funktionelle COOH-Gruppen und mehrere Aminogruppen, monosubstituierte Aminogruppen oder disubstituierte Aminogruppen aufweist, oder eine Mischung aus solchen Säuren ist.

11. Wässrige Gele nach einem der Ansprüche 1 bis 4, dadurch gekennzeichnet, daß sie zusätzlich Elemente zum enzymatischen Nachweis enthalten.

12. Wässrige Gele nach einem der Ansprüche 1 bis 4, dadurch gekennzeichnet, daß sie zusätzlich 0,5 bis 5 Gew.-% Kasein oder Gelatine enthalten.

13. Kombination aus einem wässrigen Gel nach einem der Ansprüche 1 bis 12 und einem dieses enthaltenden Metallrohr, dadurch gekennzeichnet, daß das Metallrohr die Eigenschaft besitzt, unter Druck verformt zu werden, so daß sein Volumen sich in irreversibler Weise im Maße der Entnahme des Gels verringert.

14. Kombination nach Anspruch 13, dadurch gekennzeichnet, daß das Rohr ein Volumen von 10 ml bis 500 ml aufweist und das Verhältnis von Durchmesser des Rohres zu Durchmesser des Rohrausgangs zwischen 2 und 20 liegt.

15. Verwendung der wässrigen Gele nach einem der Ansprüche 1 bis 12 bei der Elektrophorese, der Immunoelektrophorese, der Doppeldiffusion, der radialen Immunodiffusion, der Konterelektrophorese, der Elektroimmunodiffusion, der Isoelektrofokalisation und kombinierten Methoden dieser Art.